# EUROPÄISCHE PATENTANMELDUNG

(11) **EP 0 967 715 A2**
(43) Veröffentlichungstag der Anmeldung: **29.12.1999**
(21) Anmeldenummer: 99201926.5
(22) Anmeldetag: 16.06.1999
(51) Int. Cl.: H02P 6/14

(54) **Bürstenloser Gleichstrommotor**

(30) Priorität: 24.06.1998 DE 19828046
(71) Anmelder: Philips Patentverwaltung GmbH, 22335 Hamburg (DE); Koninklijke Philips Electronics N.V., 5621 BA Eindhoven (NL)
(72) Erfinder: Halfmann, Jürgen, Dipl.-Ing., 22335 Hamburg (DE)
(74) Vertreter: Gössmann, Klemens

(57) **Zusammenfassung**

Die Erfindung betrifft einen bürstenlosen Gleichstrommotor (1) mit einer Kommutierungsschaltung (5) zur Kommutierung von Strangströmen zur Erzeugung eines bestimmten Kommutierungswinkels in einem bestimmten Betriebszustand des Gleichstrommotors (1).

Um für alle Betriebszustände einen zufriedenstellender Betrieb des Motors gewährleisten zu können, ist ein Umschalten der Kommutierungsschaltung (5) zwischen mehreren Modi, in denen verschiedene Kommutierungswinkel (-160°, -220°) generiert werden, mit einer gegenüber der Betriebsfrequenz des Motors wesentlich größeren Umschaltfrequenz vorgesehen.

Die Erfindung ist insbesondere für den Einsatz in bürstenlosen Gleichstrommotoren für Haushaltsgeräte wie Küchenmaschinen geeignet.

## Beschreibung

Die Erfindung bezieht sich auf einen bürstenlosen Gleichstrommotor mit einer Kommutierungsschaltung zur Kommutierung von Strangströmen zur Erzeugung eines bestimmten Kommutierungswinkels in einem bestimmten Betriebszustand des Gleichstrommotors.

Derartige Motoren werden beispielsweise in Haushaltsgeräten wie Küchenmaschinen eingesetzt.

Aus der EP 0 762 625 A1 ist ein bürstenloser Gleichstrommotor bekannt, bei dem eine geglättete Speisegleichspannung einer aus drei Halbrücken mit jeweils zwei Schaltelementen bestehenden Kommutierungsschaltung zugeführt wird. Die Kommutierungsschaltung liefert Strangspannungen für die drei Stränge des Motorständers, die in Sternschaltung angeordnet sind. Die Kommutierungsschaltung wird von einer Baugruppe mit Steuerungs- und Regelungselementen mit Kommutierungssignalen versorgt, die die Schaltzustände der Schaltelemente der Kommutierungsschaltung bestimmen. Die Baugruppe wertet dazu zur Drehposition des Rotors des Gleichstrommotors korrespondierende und von Positionsgebern gelieferte Sensorsignale aus. Die Positionsgeber sind in der Nähe des Rotors angeordnet und beispielsweise als Hall-Sensoren ausgebildet. Mittels einer Pulsweitenmodulation (PWM) werden der Zeitverlauf und die Beträge der Strangspannungen eingestellt. Die Pulsweitenmodulation wird dabei durch schnelles Umschalten der Schaltelemente der Kommutierungsschaltung durchgeführt, wobei die Frequenz der Pulsweitenmodulation wesentlich höher als die Kommutierungsfrequenz ist.

Bei bürstenlosen Gleichstrommotoren, bei denen beispielsweise aus Kostengründen der Kommutierungswinkel nicht frei einstellbar ist, sondern nur eine begrenzte Anzahl einstellbarer Kommutierungswinkel zur Verfügung steht, besteht das Problem, daß nicht für alle Betriebszustände ein zufriedenstellender Betrieb des Motors gewährleistet ist.

Das Problem wird mittels der Erfindung dadurch gelöst, daß ein Umschalten der Kommutierungsschaltung zwischen mehreren Modi, in denen verschiedene Kommutierungswinkel generiert werden, mit einer gegenüber der Betriebsfrequenz des Motors wesentlich größeren Umschaltfrequenz vorgesehen ist.

Durch das schnelle Umschalten zwischen den Modi ergibt sich ein resultierender Kommutierungswinkel, der zwischen den ohne das schnelle Umschalten verfügbaren Kommutierungswinkeln liegt. Die Anzahl verfügbarer Kommutierungswinkel wird aufdiese Weise vergrößert, ohne daß der Grundaufbau des Gleichstrommotors wesentlich geändert werden muß. Der resultierende Kommutierungswinkel wird aus den auch ohne die Erfindung zur Verfügung stehenden Kommutierungswinkeln abgeleitet. Es muß lediglich eine Kontrollschaltung zur Steuerung/Regelung des schnellen Umschaltens vorgesehen werden. Die Betriebsfrequenz des Motors wird hier als Grundfrequenz der Strangströme definiert.

Vorzugsweise wird ein Umschalten der Kommutierungsschaltung zwischen einem ersten Modus, in dem ein erster Kommutierungswinkel generiert wird, und einem zweiten Modus, in dem ein zweiter Kommutierungswinkel generiert wird, mit einer gegenüber der Betriebsfrequenz des Motors wesentlich größeren Umschaltfrequenz vorgesehen. Wenn ein resultierender Kommutierungswinkel generiert werden soll, der in der Mine zwischen zwei auch ohne die Erfindung zur Verfügung stehenden Kommutierungswinkeln liegt, reicht ein solches Umschalten zwischen lediglich zwei Kommutierungswinkeln aus, auch wenn die den ersten Modi zugewiesenen Zeitspannen gleich den den zweiten Modi zugewiesenen Zeitspannen sind.

In einer Ausgestaltung der Erfindung ist eine Digitalschaltung zur Steuerung des Umschaltens zwischen den Modi vorgesehen. Die Steuerung läßt sich so preisgünstig und mit wenig Auswand realisieren. Insbesondere wird mittels der Digitalschaltung die Frequenz des Umschaltens zwischen den Modi aus der Frequenz einer Pulsweitenmodulation, die zur Einstellung der Zeitverläufe der Beträge der Strangspannungen dient, abgeleitet. Aus der sowieso regelmäßig zur Verfügung stehenden Frequenz einer Pulsweitenmodulation kann leicht durch Frequenzteilung oder Frequenzvervielfachung ein Steuersignal mit der gewünschten Frequenz entsprechend der Frequenz des Umschaltens zwischen den Modi abgeleitet werden.

Insbesondere für den Bremsbetrieb des Gleichstrommotors läßt sich die Erfindung zur Anpassung des Kommutierungswinkels einsetzen.

Die Erfindung bezieht sich auch aufeine Digitalschaltung zur Steuerung des Umschaltens der Kommutierungsschaltung in der oben ausgeführten Weise.

Ein Ausführungsbeispiel der Erfindung wird im folgenden anhand der Figuren näher erläutert. Es zeigen:
- Fig.1: die Grundstruktur eines erfindungsgemäßen Gleichstrommotors und
- Fig. 2: eine Steuerschaltung zur Steuerung der Kommutierungsschaltung des Gleichstrommotors.

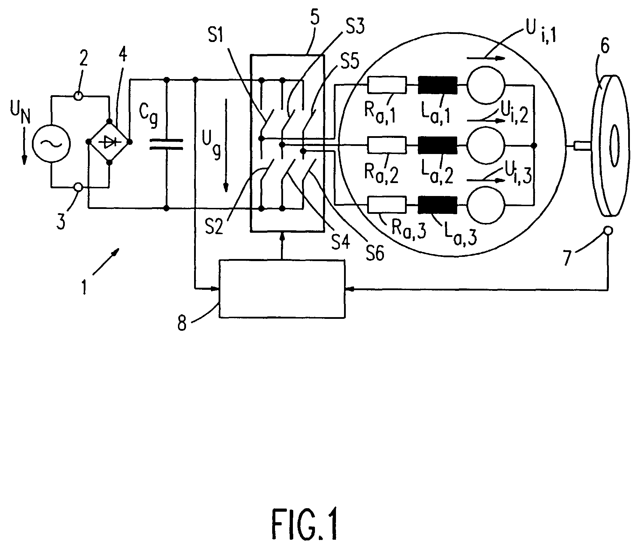

Dem in Fig. 1 gezeigten bürstenlosen Gleichstrommotor 1 wird an zwei Eingangsanschlüsse 2 und 3 eine Netzspannung U_{N} zugeführt, beispielsweise eine Spannung von 230 Volt und 50 Hz. Die Netzspannung U_{N} wird an einen Netzgleichrichter 4 angelegt. Der Netzgleichrichter 4 liefert eine Speisegleichspannung an einen Glättungskondensator C_{g}, an dem somit eine geglättete Speisegleichspannung U_{g} anliegt. Die Spannung U_{g} wird einer Kommutierungsschaltung 5 zugeführt, die aus drei Halbbrücken mit jeweils zwei Schaltelementen besteht. Die erste Halbbrücke enthält die Schaltelemente S1 und S2, die zweite Halbbrücke die Schaltelemente S3 und S4 und die dritte Halbbrücke die Schaltelemente S5 und S6. Die Kommutierungsschaltung 5 versorgt drei in Sternschaltung geschaltete Stränge des Motorständers mit den erforderlichen Strangspannungen. Die Anordnung der Stränge in Sternschaltung ist aber nur eine beispielhafte Motorausführungsform und keine zwingende Voraussetzung für die vorliegende Erfindung. Der erste Strang hat einen Wirkwiderstand R_{a,1} und eine Induktivität L_{a,1}. In ihm wird eine Spannung U_{i,1} induziert. Der zweite Strang weist einen Wirkwiderstand R_{a,2} und eine Induktivität L_{a,2} aufund in ihm wird eine Spannung U_{i,2} induziert. Der dritte Strang schließlich weist einen Wirkwiderstand R_{a,3} und eine Induktivität L_{a,3} auf Im dritten Strang wird eine Spannung U_{i,3} induziert. Der erste Strang ist mit einem Punkt zwischen den Schaltelementen S1 und S2, der zweite Strang mit einem Punkt zwischen den Schaltelementen S3 und S4 und der dritte Strang mit einem Punkt zwischen den Schaltelementen S5 und S6 verbunden.

Der Gleichstrommotor 1 enthält einen Permanentmagnetläufer 6, dessen Drehposition mit drei Positionsgebern 7 detektiert wird. In Fig. 1 ist nur einer der Positionsgeber 7 dargestellt. Die Positionsgeber sind insbesondere als Hall-Sensoren ausgeführt. Sie liefern Positionssignale an eine Steuerschaltung 8, die mit der Spannung U_{g} versorgt wird und die die Schaltzustände der Schaltelemente S1 bis S6 der Kommutierungsschaltung 5 steuert. Einzelheiten zur Steuerung der Kommutierungsschaltung 5 lassen sich beispielsweise aus der schon eingangs genannten EP 0 762 625 A1 entnehmen.

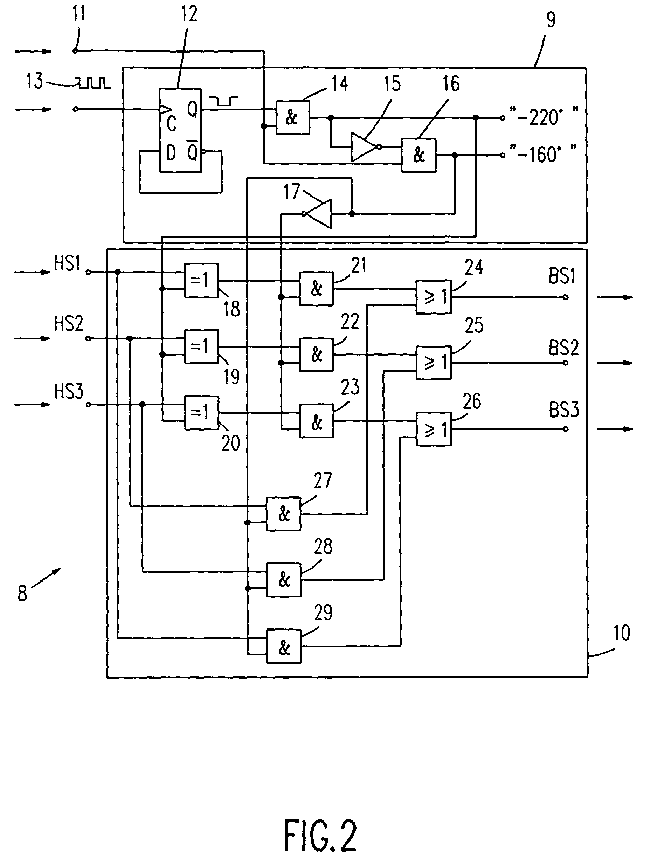

Fig. 2 zeigt Schahungsdetails der Steuereinheit 8, die in Fig. 1 bereits erwähnt wurde. Es sind eine Synchronisationseinheit 9 und eine Verarbeitungseinheit 10 vorgesehen. Die Verarbeitungseinheit 10 empfängt und verarbeitet von den Positionsgebern 7 erzeugte digitale Sensorsignale HS1, HS2 und HS3. Sie liefert an ihren drei Ausgängen drei digitale Steuersignale BS1, BS2 und BS3, mit deren Hilfe die Schaltzustände der Schaltelemente S1 bis S6 der Kommutierungsschaltung 5 eingestellt werden. Im Normalbetrieb des Gleichstrommotors 1, d.h. wenn der Gleichstrommotor seine Antriebsfunktion im Rahmen eines elektrischen Geräts ausführt, werden die Sensorsignale HS1, HS2 und HS3 unverändert an die Steuersignalausgänge der Verarbeitungseinheit 10 weitergegeben und dort als Steuersignale BS1, BS2 und BS3 verwendet. Die Positionsgeber 7 sind dabei so angeordnet, daß sich in diesem Betriebszustand ein bestimmter vorteilhafter Kommutierungswinkel einstellt. Im vorliegenden Fall ist für diesen Betriebszustand beispielsweise ein Kommutierungswinkel von ― 40 ° vorgesehen. Die Synchronisationseinheit 9 entfaltet ihre Wirkung auf die Verarbeitung durch die Verarbeitungseinheit 10, wenn der Gleichstrommotor im Bremsbetrieb ist. In diesem Betriebszustand wird der Synchronisationseinheit 9 ein Bremssignal an ihrem Eingang 11 zugeführt, im vorliegenden Fall in Form einer digitalen "1". Die Synchronisationseinheit 9 bewirkt, daß während eines Bremsvorgangs ein bestimmter vorteilhafter Kommutierungswinkel eingestellt wird, im vorliegenden Fall ein Kommutierungswinkel von ― 190 °.

Im folgenden wird die Erzeugung des für den Bremsbetrieb gewünschten Kommutierungswinkels im einzelnen erläutert. In diesem Zusammenhang wird ausgenutzt, daß beim vorliegenden Gleichstrommotor 1 allein durch Änderung der Zuordnung der Sensorsignale HS1, HS2 und HS3 zu den Steuersignalen BS1, BS2 und BS3 eine Änderung des sich einstellenden Kommutierungswinkels erreichbar ist. Der bereits erwähnte Kommutierungswinkel von ― 40 ° stellt sich ein, wenn als Steuersignal BS1 das Sensorsignal HS1, wenn als Steuersignal BS2 das Sensorsignal HS2 und wenn als Steuersignal BS3 das Sensorsignal HS3 verwendet wird. Durch zyklisches Vertauschen dieser Zuordnung oder der Invertierung der Sensorsignale läßt sich der von der Steuereinheit 8 eingestellte Kommutierungswinkel verändern. Wird als Steuersignal BS1 das Sensorsignal HS2, als Steuersignal BS2 das Sensorsignal HS3 und als Steuersignal BS3 das Sensorsignal HS1 verwendet, stellt sich aufgrund dieser zyklischen Vertauschung der Zuordnung zwischen Steuersignalen und Sensorsignalen ein Kommutierungswinkel ― 160 ° ein. Wird als Steuersignal BS1 das invertierte Sensorsignal HS1, als Steuersignal BS2 das invertierte Steuersignal HS2 und als Steuersignal BS3 das invertierte Sensorsignal HS3 verwendet, stellt sich aufgrund des damit erzeugten Phasenversatzes von 180 ° ein Kommutierungswinkel von ― 220 ° ein.

Die Synchronisationseinheit 9 enthält ein als Frequenzteiler wirkendes flankengetriggertes D-Flip-Flop. Diesem wird an seinem Takteingang C ein Taktsignal 13 zugeführt, das ansonsten für eine ebenfalls durch die Kommutierungsvorrichtung 5 durchgeführte Pulsweitenmodulation verwendet wird. Die Pulsweitenmodulation dient zur Formung der Kurvenform der Strangspannungen bzw. Strangströme des Gleichstrommotors 1. Die Pulsweitenmodulation wird ebenfalls von der Steuereinheit 8 durch geeignete Modulation der den Schaltelementen S1 bis S6 zugeführten Steuersignale kontrolliert. Das am Ausgang Q des Flip-Flops 12 anliegende Digitalsignal ist aus dem Pulsweitenmodulationssignal 13 durch Frequenzteilung mit dem Faktor 2 und weist daher die halbe Taktfrequenz auf. Es wird einer UND-Schaltung 14 zugeführt, deren zweiter Eingang mit dem Anschluß 11 verbunden ist und der an diesem zweiten Eingang ein digitales Bremssignal zugeführt wird. Im Bremsbetrieb des Gleichstrommotors 1 liegt am Anschluß 11 eine digitale "1" an, ansonsten eine digitale "0". Der Ausgang der UND-Schaltung 14 ist mit dem Eingang einer NICHT-Schaltung 15 verbunden, dessen Ausgang mit dem Eingang einer UND-Schaltung 16 verbunden ist. Der zweite Eingang der UND-Schaltung 16 ist mit dem zum Empfang eines Bremssignals vorgesehenen Anschluß 11 verbunden. Die Synchronisationseinheit 9 enthält weiterhin eine NICHT-Schaltung 17, deren Eingang des Ausgangssignal der UND-Schaltung 16 zugeführt wird.

Die Verarbeitungseinheit 10 enthält EXOR-Schaltungen 18, 19 und 20, die jeweils einen Eingang aufweisen, dem das Ausgangssignal der UND-Schaltung 14 zugeführt wird. Dem zweiten Eingang der EXOR-Schaltung 18 wird das Sensorsignal HS1, dem zweiten Eingang der EXOR-Schaltung 19 wird das Sensorsignal HS2 und dem zweiten Eingang der EXOR-Schaltung 20 wird das Sensorsignal HS3 zugeführt. Die Verarbeitungseinheit 10 enthält außerdem drei UND-Schaltungen 21, 22 und 23, die jeweils einen Eingang aufweisen, dem das Ausgangssignal NICHT-Schaltung 17 zugeführt wird. Der andere Eingang der UND-Schaltung 21 ist mit dem Ausgang der EXOR-Schaltung 18 verbunden. Der andere Eingang der UND-Schaltung 22 ist mit dem Ausgang der EXOR-Schaltung 19 und der andere Eingang der UND-Schaltung 23 ist mit dem Ausgang der EXOR-Schaltung 20 verbunden.

Weiterhin enthält die Verarbeitungseinheit 10 drei ODER-Schaltungen 24, 25 und 26. Ein Eingang der ODER-Schaltung 24 ist mit dem Ausgang der UND-Schaltung 21 verbunden. Der andere Eingang der ODER-Schaltung 24 ist mit dem Ausgang einer UND-Schaltung 27 verbunden, deren einem Eingang das Sensorsignal HS2 und deren anderem Eingang das Ausgangssignal der UND-Schaltung 16 zugeführt wird. Der erste Eingang der ODER-Schaltung 25 ist mit dem Ausgang der UND-Schaltung 22 verbunden, der zweite Eingang der ODER-Schaltung 25 ist mit dem Ausgang einer UND-Schaltung 28 verbunden, deren einem Eingang das Sensorsignal HS3 und dessem anderen Eingang das Ausgangssignal der UND-Schaltung 16 zugeführt wird. Der ODER-Schaltung 26 wird an ihrem ersten Eingang das Ausgangssignal der UND-Schaltung 23 und an ihrem anderen Eingang das Ausgangssignal einer UND-Schaltung 29 zugeführt. An dem einen Eingang der UND-Schaltung 29 liegt das Sensorsignal HS1 und an dem anderen Eingang der UND-Schaltung 29 liegt das Ausgangssignal der UND-Schaltung 16 an. Die ODER-Schaltung 24 liefert an ihrem Ausgang das Steuersignal BS1, die ODER-Schaltung 25 liefert an ihrem Ausgang das Steuersignal BS2 und die ODER-Schaltung 26 liefert an ihrem Ausgang das Steuersignal BS3.

Für den Fall, daß ihm Bremsbetrieb des Gleichstrommotors 1 am Ausgang Q des Flip-Flops 12 eine digitale "1" anliegt, liegt auch am Ausgang der UND-Schaltung 14 eine digitale "1" an. Gleichzeitig liefert die UND-Schaltung 16 an ihrem Ausgang eine digitale "0". Für diesen Fall wird als Steuersignal BS1 das invertierte Sensorsignal HS1, als Steuersignal BS2 das invertierte Sensorsignal HS2 und als Steuersignal BS3 das invertierte Sensorsignal HS3 der Kommutierungsschaltung 5 zugeführt. Dies entspricht der Einstellung eines Kommutierungswinkels von ― 220 °.

Für den Fall, daß am Ausgang Q des Flip-Flops 12 im Bremsbetrieb des Gleichstrommotors 1 eine digitale "0" anliegt, liefert die UND-Schaltung 16 an ihrem Ausgang eine digitale "1"; am Ausgang der UND-Schaltung 14 liegt für diesen Fall eine digitale "0" an. Dies führt dazu, daß als Steuersignal BS1 das Sensorsignal HS2, als Steuersignal BS2 das Sensorsignal HS3 und als Steuersignal BS3 das Sensorsignal HS1 ausgegeben wird. Dies entspricht der Einstellung aufeinen Kommutierungswinkel auf- 160 °.

Zwischen dem Modus, in dem eine Einstellung aufeinen Kommutierungswinkel von - 220 ° und dem Modus, in dem eine Einstellung des Kommutierungswinkels auf einen Wert von ― 160 ° erfolgt, wird mit einer der Frequenz des am Ausgang Q des Flip-Flops 12 anliegenden Signals entsprechenden Frequenz umgeschaltet. Diese Umschaltfrequenz ist wesentlich größer als die Betriebsfrequenz des Motors 1. Die Motorbetriebsfrequenz entspricht der Frequenz der Grundschwingung der Strangspannungen bzw. Strangströme. Die Frequenz der Strangspannungen bzw. Strangströme liegt dabei beispielsweise im Bereich von 10 Hz bis 1 kHz, die Umschaltfrequenz zwischen den beiden Modi mit dem Kommutierungswinkeln -220 ° und ― 160 ° liegt im vorliegenden Fall im Bereich zwischen 5 kHz und 10 kHz. Aufgrund des gegenüber der Motorbetriebsfrequenz schnellen Umschaltens zwischen den beiden Modi mit gleichem Tastverhältnis ergibt sich im hier beschriebenen Ausführungsbeispiel ein resultierender Kommutierungswinkel von -190°.

Indem die Synchronisationseinheit 9 und die Verarbeitungseinheit 10 als Digitalschaltungen ausgeführt sind und mithin das Umschalten zwischen den Modi mit den Kommutierungswinkeln -220 ° und ― 160 ° mittels einer Digitalschaltung gesteuert wird, ergibt sich eine besonders einfache Ausführungsform der Erfindung. Die Erfindung ist nicht auf den Einsatz für den Bremsbetrieb des Gleichstrommotors 1 beschränkt. Sie läßt sich beliebig für jeden Betriebszustand des Gleichstrommotors mit einem bestimmten gewünschten Kommutierungswinkel verwenden. Die Erfindung ist auch nicht darauf beschränkt, daß zwischen zwei Modi und damit zwischen zwei Kommutierungswinkeln umgeschaltet wird. Der dargestellte Ansatz läßt sich auch ohne weiteres so erweitern, daß zwischen mehr als zwei Modi mit damit mehr als zwei Kommutierungswinkeln umgeschaltet wird, um die Einstellung anderer resultierender Kommutierungswinkel zu erreichen. Als weitere Ausführungsvariante soll hier erwähnt werden, nicht gleichmäßig zwischen den verschiedenen Modi umzuschalten, sondern unterschiedlich lange Zeitspannen und damit unterschiedliche Tastverhältnisse für die verschiedenen Modi vorzusehen, um den Bereich erzeugbarer resultierender Kommutierungswinkel zu vergrößern.

## Patentansprüche

1. Bürstenloser Gleichstrommotor (1) mit einer Kommutierungsschaltung (5) zur Kommutierung von Strangströmen zur Erzeugung eines bestimmten Kommutierungswinkels in einem bestimmten Betriebszustand des Gleichstrommotors (1),
dadurch gekennzeichnet,
daß ein Umschalten der Kommutierungsschaltung (5) zwischen mehreren Modi, in denen verschiedene Kommutierungswinkel (-160°, -220°) generiert werden, mit einer gegenüber der Betriebsfrequenz des Motors wesentlich größeren Umschaltfrequenz vorgesehen ist.

2. Gleichstrommotor nach Anspruch 1,
dadurch gekennzeichnet,
daß ein Umschalten der Kommutierungsschaltung zwischen einem ersten Modus, in dem ein erster Kommutierungswinkel (-160°) generiert wird, und einem zweiten Modus, in dem ein zweiter Kommutierungswinkel (-220°) generiert wird, mit einer gegenüber der Betriebsfrequenz des Motors wesentlich größeren Umschaltfrequenz vorgesehen ist.

3. Gleichstrommotor nach Anspruch 1 oder 2,
dadurch gekennzeichnet,
daß eine Digitalschaltung (9, 10) zur Steuerung des Umschaltens zwischen den Modi vorgesehen ist.

4. Gleichstrommotor nach Anspruch 3,
dadurch gekennzeichnet,
daß mittels der Digitalschaltung (9, 10) eine Ableitung der Frequenz des Umschaltens zwischen den Modi aus der Frequenz einer Pulsweitenmodulation, die zur Einstellung der Zeitverläufe der Beträge der Strangspannungen dient, vorgesehen ist.

5. Gleichstrommotor nach einem der Ansprüche 1 bis 4,
dadurch gekennzeichnet,
daß das Umschalten zwischen den Modi zur Erzeugung eines bestimmten Kommutierungswinkels (-190°) im Bremsbetrieb des Gleichstrommotors (1) vorgesehen ist.

6. Digitalschaltung zur Steuerung des Umschaltens der Kommutierungsschaltung nach einem der Ansprüche 1 bis 5.
